(19) Europäisches Patentamt
European Patent Office
Office européen des brevets

(11) Veröffentlichungsnummer: **0 387 577 A2**

(12) # EUROPÄISCHE PATENTANMELDUNG

(21) Anmeldenummer: **90103645.9**

(22) Anmeldetag: **25.02.90**

(51) Int. Cl.5: **C08L 69/00, G03G 5/00, C08G 64/06**

(30) Priorität: **11.03.89 DE 3908037**

(43) Veröffentlichungstag der Anmeldung: **19.09.90 Patentblatt 90/38**

(84) Benannte Vertragsstaaten: **DE ES FR GB IT NL**

(71) Anmelder: **BAYER AG**
**D-5090 Leverkusen 1 Bayerwerk(DE)**

(72) Erfinder: **Berg, Klaus, Dr.**
**Hansastrasse 124**
**D-4150 Krefeld(DE)**
Erfinder: **Weymans, Günther, Dr.**
**Karl-Arnold-Strasse 4**
**D-5090 Leverkusen 1(DE)**
Erfinder: **Westeppe, Uwe, Dr.**
**Vogelskamp 72**
**D-4020 Mettmann(DE)**

(54) **Polycarbonat-Mischungen.**

(57) Die Erfindung betrifft thermoplastische Mischungen aus p-m′-Bisphenol-A-Polycarbonat und Polycarbonaten, auf Basis von Bisphenolen der Formel (I)

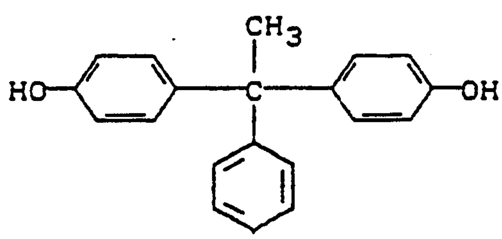

(I)

oder der Formel

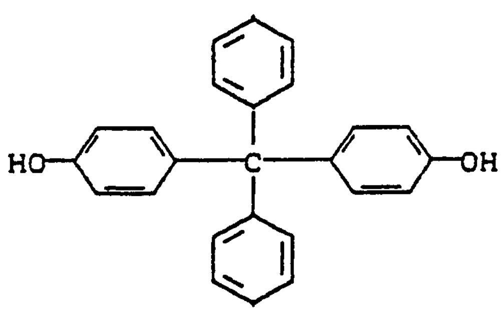

(II)

EP 0 387 577 A2

## Polycarbonat-Mischungen

# Polycarbonat-Mischungen

Die Erfindung betrifft thermoplastische Mischungen aus p-m′-Bisphenol-A-Polycarbonat und Polycarbonaten, auf Basis von Bisphenolen der Formel (I)

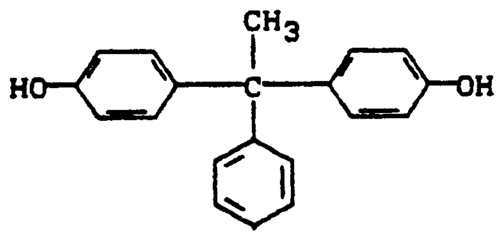

(I)

oder der Formel

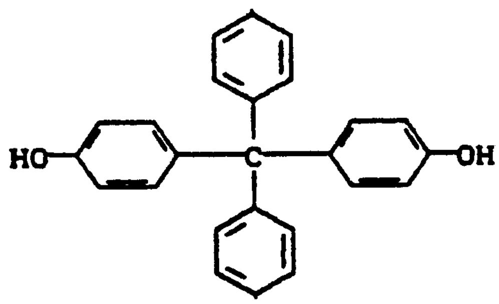

(II)

Aufgrund ihrer sehr geringen Doppelbrechung sind diese Mischungen als Substrate für optische Datenspeicher geeignet, zumal sie Formkörper mit besonders niedriger Doppelbrechung in tangentialer und radialer Richtung zur Plattenfläche ergeben. Die Mischungen können auch zu Formteilen mit exzellenten Barriere-Eigenschaften verarbeitet werden.

Die Erfindung betrifft somit auch die Verwendung der erfindungsgemäßen Mischungen als Substrate für optische Datenspeicher und als Formkörper, z.B. Folien, Membranen, Spritzgußteile, Extrudate mit geringer Gasdurchlässigkeit (Barriereverhalten).

Formmassen aus aromatischen Polycarbonaten und ihre Verwendung für optische Datenspeicher sowie für Folien zur Rückhaltung von Gasen sind bekannt. (US-PS 3 554 742; Japanische Patentanmeldungen 60/163 007, 60/166 321 (Grundwerkstoffe für optische Geräte); US-PS 4 304 899 und US-PS 4 195 157 (Barriereeigenschaften)).

Grundwerkstoffe für optische Gerate müssen nicht nur eine ausgezeichnete Transparenz, Hitzebeständigkeit, Feuchtigkeitsbeständigkeit und mechanische Festigkeit haben, sondern zugleich auch in den optischen Eigenschaften hervorragend sein. Diese Anforderungen werden von bisher bekannten Polycarbonat-Harzen nicht befriedigend erfüllt.

Polycarbonate auf Basis der Bisphenole der Formeln (I) und (II) haben eine gute Wärmeformbeständigkeit, sind aber wegen ungenügender Fließfähigkeit nur schlecht zu verarbeiten. Durch Spritzguß hergestellte optische Platten haben innere Spannungen, die das genaue Lesen der gespeicherten Informationen erschweren.

Die rheologischen Eigenschaften von Polycarbonaten können durch Darstellung der in der Schmelze gemessenen Viskosität als Funktion der Scherrate bei verschiedenen Temperaturen, (z.B. gemessen mit einem Kapillar-Viskosimeter) beschrieben werden. Günstige rheologische Eigenschaften hat ein Polycarbonat (oder eine Mischung von Polycarbonaten) nur, wenn seine Schmelzen bei technisch sinnvollen Verarbeitungstemperaturen gut fließen und/oder wenn sie in einem breiten Temperatur/Scherraten-Bereich verarbeitet werden können. Für Substrate für optische Datenspeicher ist zusätzlich eine hohe Transparenz erforderlich. Versucht man durch Zumischen eines anderen Polymeren das Fließverhalten zu verbessern, so wird in der Regel die Transparenz vermindert und die gewünschten Eigenschaften nicht erhalten.

Die Barrierewirkung von Folien oder anderen Formteilen aus Polycarbonaten für Gase hängt von der Dichte des Werkstoffs ab. Durch Einarbeiten von niedermolekularen Additiven kann man die Dichte erhöhen

und damit die Barriere-Eigenschaften verbessern, (vgl. EP-A 242 147). Auch durch Erhöhung der Kristallinität kann man die Barriere-Eigenschaften von Folien verbessern (vgl. J. Appl. Polym. Sci (1984), Vol. 29, S. 845 ff). Aber auch dann ist die Gasdurchlässigkeit und Feuchtigkeitsauf nahme der Werkstoffe noch zu hoch. Additive können weiterhin Verfärbungen bewirken, Erhöhung der Kristallinität führt meistens zu Trübung und/oder Versprödung.

Polymermischungen, die eine gute Barrierewirkung zeigen, transparent und doppelbrechungsarm sind und außerdem leicht verarbeitbar sind - also vier Vorteile vereinen -sind daher von großem Interesse.

Gegenstand der Erfindung sind thermoplastische Mischungen aus

(a) 1 bis 99 Gew.-%, bevorzugt 5 - 80 Gew.-%, des p-m′-Bisphenol-A-Polycarbonats

und

(b) 99 bis 1 Gew.-%, bevorzugt 95 - 20 Gew.-%, eines Polycarbonats auf Basis von Bisphenolen der Formel (I) und/oder (II) einschließlich Copolycarbonaten, welche zu wenigstens 5 Mol-% Bisphenole der Formel (I) und/oder (II) enthalten.

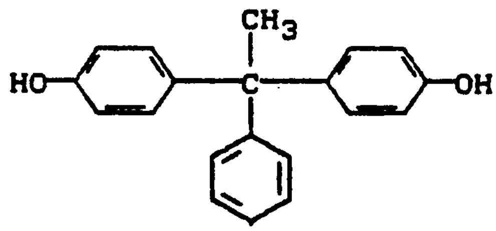
(I)

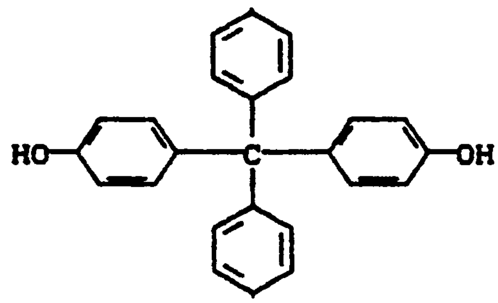
(II)

Die erfindungsgemäßen Mischungen sind thermoplastisch leicht verarbeitbar und erfüllen die Anforderungen an Grundwerkstoffe für optische Geräte und Barriere-Eigenschaften und sind transparent.

Die Mischungsbestandteile (a) und (b) können Molekulargewichte (Gewichtsmittel $\overline{M}_w$, gemessen durch Gelpermeationschromatographie in Dimethylformamid bei 20 °C bei einer Konzentration von C = 5 g/l) von 10 000 bis 250 000 g/mol haben, bevorzugt 12 000 bis 180 000 g/mol, ganz besonders 18 000 bis 100 000 g/mol, wobei sich die Polykondensationsgrade Pw von a) und b) (Verhältnis von $\overline{M}_w$ zur Molmasse der wiederkehrenden Einheit des Polycarbonats) bevorzugt um nicht mehr als 50 Einheiten unterscheiden. Das p-m′-Bisphenol-A-Polycarbonat kann dabei unterschiedliche molekulare Einheitlichkeiten haben.

Die molekulare Unheitlichkeit

$$U_n = \frac{\overline{M}_w}{\overline{M}_n} - 1$$

des p-m′-Bisphenol-A-Polycarbonats kann von 0,05 bis 15 sein, bevorzugt 0,1 bis 7, ganz besonders 0,5 bis 2. Die in Methylenchlorid bei T = 25 °C in einer Konzentration von c = 5 g/l gemessen relativen Viskositäten können für a) und b) 1,05 bis 2,5 sein, bevorzugt sind (a) und (b), deren relative Viskosität sich um nicht mehr als 0,5 unterscheidet.

Die Polycarbonate (b) enthalten einkondensiert - bezogen auf gesamte Bisphenole - wenigstens 5 Mol-% der Bisphenole (I) und/oder (II), bevorzugt mindestens 30 Mol-%, besonders bevorzugt mindestens 70 Mol-%. Die Polycarbonate (b) enthalten gegebenenfalls einkondensiert neben den Bisphenolen (I) und/oder (II) Bisphenole der allgemeinen Formel

HO-Ar-OH (III)

wobei

Ar ein aromatischer Rest mit 6 bis 30 C-Atomen ist, der einen oder mehrere aromatische Kerne enthalten kann, substituiert sein kann, aliphatische Reste oder Heteroatome als Brückenglieder enthalten kann.

Die OH-Gruppen können in para-, meta- oder ortho-Stellung stehen.

Solche Bisphenole sind bekannt und z.B. in US 3 028 365, US 3 148 172, US 2 999 846 und der DOS 2 063 052 beschrieben. Beispiele für solche Bisphenole sind:
Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ehter
Bis-(hydroxyphenyl)-ketone
Bis-(hydroxyphenyl)-sulfone
Bis-(hydroxyphenyl)-sulfoxide
$\alpha,\alpha'$-Bis-(hydroxyphenyl)-diisopropylbenzole,
sowie deren kernalkylierte und kernhalogenierte Verbindungen. Besonders bevorzugt ist Bisphenol-A.

Die erfindungsgemäßen Mischungen können beispielsweise durch Mischen der Bestandteile in einem Extruder hergestellt werden. Formkörper (auch für optische Datenspeicher) können durch Spritzguß erzeugt werden. Folien können nach den üblichen Blasverfahren oder durch Ziehen/Strecken aus der Schmelze oder durch Extrusion - auch Koextrusion mit anderen Folien/Materialien - in bekannter Weise hergestellt werden, sowie durch Gießen aus Lösungen in für a) und b) geeigneten Lösungsmitteln.

Die Verwendung der erfindungsgemäßen Mischungen für optische Datenspeicher wird im Folgenden beispielhaft beschrieben.

Die erfindungsgemäßen Mischungen stellen das "Substrat" für optische Datenspeicher dar, nämlich das Material, aus dem eine Datenplatte besteht, die ihrerseits als Träger für eine Informationsschicht oder -ebene dient und als "Abstandshalter" zwischen der Informationsschicht und der äußeren - ebenen - Plattenoberfläche.

Der informationstragende Lichtstrahl muß sowohl zum Lesen als auch zum Beschreiben der Datenplatte unverändert das Substrat durchlaufen, - auf dem Weg von der ebenen Plattenoberfläche zur (gegenüberliegenden) Informationsschicht und - im Falle des Lesestrahls -von dieser wieder zur Plattenoberfläche zurück, (aus der er zum Detektor hin austritt). Beispiele für optische Datenspeicher sind die Audio-Compact Disc und die Video-Disc.

Folien und andere Formteile aus den erfindungsgemäßen Mischungen können flach sein, z.B. homogene Membrane, Kompositionsmembrane oder asymmetrische Membrane. Sie können Hohlkörper verschiedener Geometrien bilden (zylinderförmige, kugelförmige, schlauchförmige) oder Hohlfasern sein. Kompositionsmembrane können nach EP-A 0 242 147 hergestellt werden. Porenfreie Folien erhält man z.B. nach DE-OS 2 248 818, indem man z.B. in Methylenchlorid gelöste erfindungsgemäße Mischungen zusammen mit dem Lösungsmittel auf geeignete Substrate oder mit dem Polymer-Lösungsmittel nicht mischbare andere Flüssigkeiten bringt und die Lösungsmittel verdampft.

Überraschend war die besonders gute Mischbarkeit der erfindungsgemäß verwendbaren Polycarbonate, die sich in der guten Transparenz der Mischungen äußert.

Üblicherweise zeigen Polycarbonat-Mischungen (auch die Abmischung zweier Polycarbonate) Trübung, weil sie nicht molekular mischbar sind.

Der Durchgang eines Gases durch eine dichte Polymermembran wird durch einen Lösungs-Diffusionsvorgang beschrieben. Die kennzeichnende Konstante für diesen Prozeß ist der Permeationskoeffizient P, der angibt, welches Gasvolumen V bei gegebener Druckdifferenz $\Delta p$ in einer bestimmten Zeit t durch eine Folie bekannter Fläche F und Dicke d hindurchtritt. Für den stationären Zustand läßt sich aus den Differentialgleichungen des Permeationsvorgangs ableiten:

$$P = \frac{V \cdot d}{F \cdot t \cdot \Delta p} \qquad (1)$$

Darüber hinaus ist die Permeation abhängig von der Temperatur und von der Gasfeuchte.

Die Meßanordnung besteht aus einem thermostatisierten Zwei-Kammer-System. Die eine Kammer ist für die Aufnahme des Vorgabegases und die andere für die Aufnahme des Permeates ausgelegt. Die

Kammern sind durch die zu messende Polymermembran getrennt.

Vor der Gasvorgabe werden beide Kammern auf 0.001 mbar evakuiert und die Vorgabekammer dann mit Gas gefüllt. Das permeierte Gas (inerte Gase) bewirkt denn in der Permeatkammer bei konstantem Volumen einen Druckanstieg, der mit einem Druckaufnehmer, z. B. Baratron der Firma MKS, in Abhängigkeit von der Zeit bis in den stationären Gasdurchgang registriert wird. Hieraus wird V bei Normaltemperatur nach (1) errechnet, t ist bekannt. Die vorgegebene Druckdifferenz $\Delta p$ wird jeweils auf 10 Mega-Pascal eingestellt. Die Membranfläche F ist bekannt. Die Membrandicke d wird mittels Mikrometerschraube als Mittel aus 10 unabhängigen über die Membranfläche verteilten Dickenmessungen ermittelt.

Aus diesen Größen ist der Permeationskoeffizient P nach (1) zu bestimmen in den Einheiten:

$$\left[\frac{cm^3\ (NTP) \cdot mm}{m^2 \cdot 24\ h \cdot 10^5\ Pa}\right]$$

wobei auf eine Membrandicke von 1 mm bezogen ist. Temperatur: 25° C, relative Gasfeuchte: 0 %.

Nach dem in Janeschitz-Kriegl Polymer Melt Rheology and Flow Birefringence, Springer-Verlag 1983 beschriebenen Verfahren wird die Polymerschmelze durch Scherung in einem Kegel-Platte-Rheometer orientiert. Man mißt während der Drehbewegung die Doppelbrechung mit einem Laserstrahl durch den Pluttenspalt also in radialer Richtung. Durch die Schergeschwindigkeit $\gamma$ wird eine Schubspannung erzeugt. Diese Schubspannung bewirkt Doppelbrechung. Man erhält aus der Beziehung

$$\Delta n = \frac{2\ C}{\sin 2\ X} \cdot \eta \cdot \gamma$$

die Doppelbrechung. Dabei ist X der Auslöschungswinkel. Dieser Winkel kann direkt mit der polarisationsmikroskopischen Meßanordnung gemessen werden. Man bestimmt zunächst isotherm für verschiedene Temperaturen T die Funktion $\Delta n$ ($\gamma$). Der Wert der Schmelzviskosität $\eta$ wird zur selben Temperatur aus dynamisch-mechanischen Messungen mit Hilfe der Cox-Merz-Regel errechnet. Daraus erhält man dann die optische Konstante C, die für verschiedene Werte $\gamma$ und T ähnliche Werte ergibt und daher eine Konstante darstellt, die die Doppelbrechungshöhe der Formmasse charakterisiert.

Die Konstante C wird in Einheiten $m^2$/GN (GN = Giga-Newton) gemessen.

Erfindungsgemäß wird als transparent eine Polymerprobe definiert, wenn bei einer Probendicke von mindestens 200 µm der Haze-Index - bestimmt nach ASTM D 1003 -kleiner als 10 % ist.

## Beispiele

Nach der in H. Schnell, "Chemistry and Physics of Polycarbonates" Polymer Reviews Vol. 9, Seite 33ff, Interscience Publ. 1964 beschriebenen Phasengrenzflächenpolykondensation wurden folgende Polycarbonate hergestellt:

Substanz 1: Polycarbonat aus dem p-m′-Isomeren des Bisphenol-A der Formel

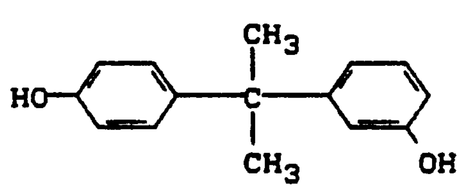

(IV)

Substanz 2: Polycarbonat aus dem Bisphenol der Formel

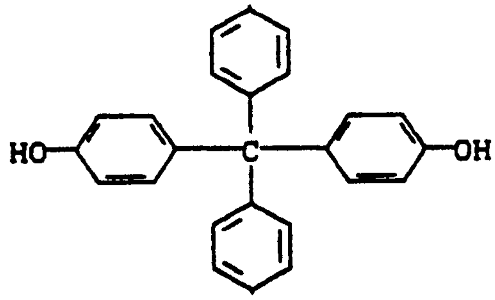

(II)

Substanz 3: Polycarbonat aus dem Bisphenol der Formel

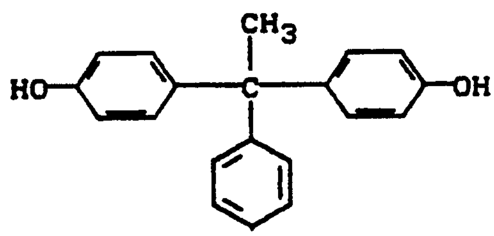

(I)

Substanz 4: Copolycarbonat aus 30 Mol-% des Bisphenols der Formel I und 70 Mol-% des Bisphenols der Formel II.

Substanz 5: Copolycarbonat aus 30 Mol-% Bisphenol der Formel I, 30 Mol-% Bisphenol der Formel II, und 40 Mol-% p,p′-Bisphenol-A.

Substanz 6: Bisphenol-A-Polycarbonat mit einer relativen Viskosität von 1,28 und einer Glastemperatur von 146 °C.

Die Substanzen 1 - 6 sind im Prinzip bekannt und können in bekannter Weise nach dem Phasengrenzflächenverfahren hergestellt werden.

Die Tabelle 1 faßt die Kenndaten dieser Substanzen zusammen. Es bedeuten: $\eta_{rel}$ = relative Viskosität in Methylenchlorid bei 25 °C in einer Konzentration von C = 5 g Polymer pro Liter Methylenchlorid), Tg = Glastemperatur, gemessen mit der Differential-Scanning-Calorimetry (DSC) bei einer Aufheizrate von 20 K/min, $\overline{M}_w$ Molekulargewicht (Gewichtsmittel), gemessen mit der Gelpermeationschromatographie, in g/mol.

Tabelle 1

| Substanz Nr. | $\eta_{rel}$ dl/g | $\overline{M}_w$ | Tg °C |
|---|---|---|---|
| 1 | 1,253 | 38 000 | 109 |
| 2 | 1,201 | 43 500 | 200 |
| 3 | 1,217 | 31 000 | 185 |
| 4 | 1,25 | n.g.*) | 190 |
| 5 | 1,30 | n.g.*) | 160 |
| 6 | 1,28 | 28 500 | 146 |

*) nicht gemessen

Erfindungsgemäße Beispiele

Beispiel 1

Bei 320 °C wurde eine Mischung aus 10 Gew.-% Substanz 1 und 90 Gew.-% Substanz 2 (Mengen: 100 g Substanz 1, und 900 g Substanz 2) auf einer Mischmaschine hergestellt und daraus durch Spritzguß Prüfkörper gewonnen. Die Prüfkörper zeigten keine Trübung. Die Glastemperatur betrug 193 °C. Die Mischung ließ sich sehr gut verarbeiten.

Hinsichtlich der optischen Qualität siehe Tabelle 2.

Beispiel 2

Substanz 3 und Substanz 1 wurden im Gewichtsverhältnis 1:4 in Methylenchlorid gelöst und unter Rühren vermischt. Nach teilweisem Eindampfen des Lösungsmittels wurde eine Folie einer Dicke von etwa 150 µm hergestellt, die transparent war. Die Folie hatte eine Glastemperatur von 127 °C. Hinsichtlich der optischen Qualität siehe Tabelle 2.

Beispiel 3

20 Gew.-% der Substanz 1 wurden mit 80 Gew.-% der Substanz 6 wie in Beispiel 2 gemischt und aus der eingedickten Lösung eine 0,1 mm dicke Folie gezogen. An dieser Folie wurde die Gaspermeation für Sauerstoff untersucht: Permeabilität von Sauerstoff: 38,0 Einheiten.

Die Permeabilität der Substanz 6 - in gleicher Weise präpariert - betrug für Sauerstoff: 73,2 Einheiten.

Hinsichtlich der optischen Qualität siehe Tabelle 2:

Tabelle 2

| Optische Qualität der erfindungsgemäßen Mischungen | | |
|---|---|---|
| | C | Transparent |
| Beispiel 1 | 0,2 | ja |
| Beispiel 2 | 0,5 | ja |
| Beispiel 3 | 2,4 | ja |

**Ansprüche**

1. Thermoplastische Mischungen aus

(a) 1 bis 99 Gew.-% p-m′-Bisphenol-A-Polycarbonat

und

(b) 99 bis 1 Gew.-% eines Polycarbonats auf Basis von Bisphenolen der Formel (I) und/oder (II) einschließlich Copolycarbonaten, welche zu wenigstens 5 Mol-% Bisphenole der Formel (I) und/oder (II) enthalten

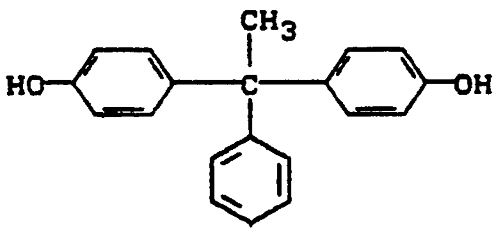

(I)

oder der Formel

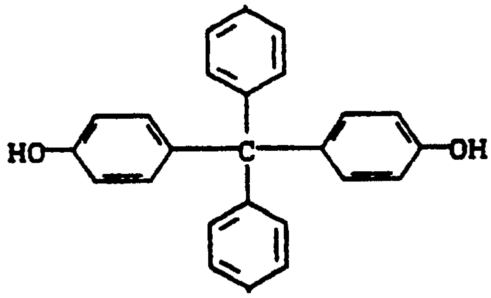

(II)

2. Thermoplastische Mischungen nach Anspruch 1 aus 5 bis 80 Gew.-% (a) und 20 bis 95 Gew.-% (b).

3. Thermoplastische Mischungen nach Anspruch 1, worin (b) wenigstens 30 Gew.-% der Bisphenole (I) und/oder (II) einkondensiert enthält.

4. Verwendung der Mischungen nach Anspruch 1 für optische Datenspeicher.

5. Verwendung der Mischungen nach Anspruch 1 zur Herstellung von Folien, Membranen und anderen Formteilen.